(19) **Europäisches Patentamt**
**European Patent Office**
**Office européen des brevets**

(11) **EP 1 542 047 B1**

(12) **FASCICULE DE BREVET EUROPEEN**

(45) Date de publication et mention
de la délivrance du brevet:
**01.04.2009 Bulletin 2009/14**

(51) Int Cl.:
*G02B 6/42* (2006.01) *H01Q 3/00* (2006.01)

(21) Numéro de dépôt: **04106431.2**

(22) Date de dépôt: **09.12.2004**

(54) **Dispositif focalisant pour fibres optiques et antenne à réseau de fibres optiques**

Fokusierende Vorrichtung für optische Fasern und Antennen, die faseroptische Gitter enthalten

Focusing device for optical fibers and optical fiber array antenna

(84) Etats contractants désignés:
**AT BE BG CH CY CZ DE DK EE ES FI FR GB GR HU IE IS IT LI LT LU MC NL PL PT RO SE SI SK TR**

(30) Priorité: **12.12.2003 FR 0314594**

(43) Date de publication de la demande:
**15.06.2005 Bulletin 2005/24**

(73) Titulaire: **Thales**
**92200 Neuilly Sur Seine (FR)**

(72) Inventeurs:
 • **CHEKROUN, Claude**
 **THALES Intellectual Property**
 **94117 CX, ARCUEIL (FR)**

 • **HUIGNARD, Jean Pierre**
 **THALES Intellectual Property**
 **94117 CX, ARCUEIL (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-03/090384**     **US-A- 3 704 996**
**US-B1- 6 396 981**

**Description**

La présente invention concerne un dispositif focalisant pour fibres optiques. Elle s'applique notamment dans le domaine des liaisons opto-hyperfréquence. Plus particulièrement, elle s'applique dans les modules hyperfréquence comportant des composants optiques.

L'invention concerne également une antenne à réseaux de fibres optiques équipées du dispositif de focalisation précité.

Les composants optiques peuvent être avantageusement utilisés dans les applications radars et plus généralement dans les applications utilisant les techniques hyperfréquence. En particulier des informations de contrôle et de commande de signaux hyperfréquence peuvent être véhiculées par des ondes optiques. Ce peut être le cas par exemple dans des antennes à balayages électronique en ce qui concerne les circuits de commande des diodes de déphasage. En particulier des composants optiques peuvent être intégrés dans des commutateurs hyperfréquence. Les techniques optiques ont notamment comme avantages une grande bande passante ainsi qu'une très faible sensibilité aux parasites hyperfréquence.

Un problème sensible dans les techniques couplant les ondes optiques et les ondes hyperfréquence est la jonction opto-hyperfréquence, c'est-à-dire le passage d'un signal du domaine optique au domaine hyperfréquence ou vice-versa. En particulier la puissance transmise peut être très dégradée au passage d'une telle jonction. Les fibres optiques peuvent être utilisées dans des modules hyperfréquences pour amener par exemple des signaux de commande. Le signal optique en sortie de la fibre rencontre alors un récepteur opto-hyperfréquence. Pour obtenir un bon rendement énergétique, le faisceau en sortie de la fibre doit être relativement étroit, donc de grande directivité, de façon à concentrer l'énergie sur l'interface opto-hyperfréquence. Si le faisceau optique en sortie d'une fibre est trop large une bonne partie de l'énergie transmise est alors perdue.

Un document US 3 704 996 décrit un dispositif de couplage optique pour la transmission d'un faisceau lumineux entre deux fibres optiques.

Un but de l'invention est notamment de permettre une focalisation du faisceau optique en sortie de fibre. A cet effet, l'invention a pour objet un dispositif de focalisation pour fibre optique tel que décrit par les revendications 1 à 6. L'invention a également pour objet une antenne comportant un plan réflecteur et un plan semi-réflecteur sensiblement parallèles formant un dispositif de focalisation tel que précédemment décrit.

D'autres caractéristiques et des avantages de l'invention apparaîtront à l'aide de la description qui suit faite en regard de dessins annexés qui représentent :

La figure 1, par une vue en coupe une fibre optique et son faisceau optique ;
La figure 2, par une vue en coupe une fibre optique et son faisceau focalisé ;
La figure 3, un exemple de réalisation d'un dispositif selon l'invention en sortie de fibre optique ;
La figure 4, une illustration du principe de fonctionnement d'un dispositif selon l'invention ;
La figure 5, une fibre optique et son faisceau optique dont la directivité est augmentée par un dispositif selon l'invention ;
La figure 6, un exemple de réalisation d'antenne selon l'invention comportant un réseau de fibres optiques ;
La figure 7, une illustration du diagramme de l'antenne précédente.

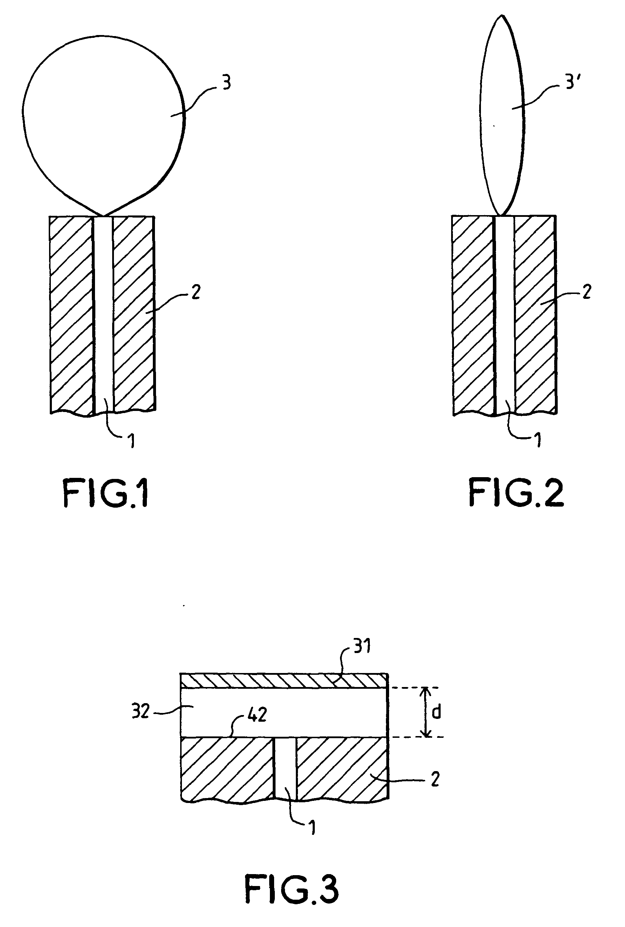

La figure 1 montre de façon schématique, par une vue en coupe une fibre optique 1 entourée d'une gaine 2. Cette fibre optique est par exemple intégrée dans un module hyperfréquence. Elle véhicule par exemple un signal optique modulé par un signal hyperfréquence. La fibre est par exemple couplée à sa sortie à un composant optoélectronique non représenté. Ce composant optoélectronique assure alors la conversion entre le signal optique et le signal hyperfréquence. Il restitue ainsi un signal hyperfréquence traité par la suite par des circuits hyperfréquence classiques, dans un radar par exemple. Le couplage en sortie de fibre optique avec d'autres composants, notamment des composants optoélectroniques, se fait par son faisceau optique 3. Comme le montre la figure 1, en l'absence de dispositif focalisant le faisceau optique en sortie de la fibre 1 est large, il est faiblement directif. Un tel faisceau n'est pas optimum du point de vue du rendement énergétique. En effet une grande partie de l'énergie n'est pas transmise au composant récepteur.

La figure 2 montre un cas idéal de faisceau focalisé 3' où toute l'énergie véhiculée par le faisceau 3' peut être transmise au composant récepteur. Le faisceau est fortement directif. Il existe des solutions pour focaliser un faisceau optique. Il est bien sûr possible d'utiliser à cet effet une lentille. Néanmoins une telle solution comporte plusieurs inconvénients. En particulier elle entraîne une complexité de réalisation et de mise au point en raison notamment du positionnement et du réglage précis exigés du fait des dimensions de la fibre optique. En cas d'application dans un environnement contraignant, dans des cas par exemples soumis à des vibrations, ces contraintes deviennent encore plus difficiles à tenir. Il en résulte par ailleurs un surcoût.

La figure 3 présente un exemple de réalisation d'un dispositif de focalisation selon l'invention équipant une fibre optique. Pour améliorer l'illumination et augmenter la directivité, le dispositif comporte un plan partiellement conducteur 31 parallèle à un plan réflecteur 42 sur lequel débouche la fibre optique 1 formant une ouverture rayonnante.

Le plan réflecteur est par exemple le plan transversal de la gaine au niveau de la sortie de la fibre optique 1, ce plan étant rendu réflecteur.

Le dispositif selon l'invention est placé en sortie de la fibre 1. Il comporte donc un miroir semi-réfléchissant plan 31 disposé à une distance d de la sortie de la fibre optique 1. Pour maintenir le miroir semi-réfléchissant à la distance d de la fibre optique, un diélectrique 32 est intercalé entre le miroir 31 et la fibre. Le diélectrique 32 est par exemple un rondin de silice, ayant notamment le même diamètre que la gaine et prolongeant celle-ci. Le miroir 32 est par exemple une couche composée d'un mélange d'oxyde de Titane ($TiO_2$) et d'oxyde de silicium ou silice ($SiO_2$), déposée par exemple sur le rondin de silice 32. De préférence le diélectrique 32 a la même constante diélectrique $\varepsilon$ que le coeur de la fibre optique 1 pour éviter notamment des problèmes de désadaptation de l'onde en sortie de la fibre. La constante diélectrique relative $\varepsilon_r$ est par exemple de l'ordre de 1,5. Toutefois, d'autres constantes diélectriques que celle de la fibre optique 1 peuvent être admises. Le milieu diélectrique peut par exemple être l'air ambiant. L'épaisseur du miroir semi-réfléchissant 31 est par exemple de l'ordre de 0,25 $\lambda$, $\lambda$ étant la longueur de l'onde optique en sortie de la fibre Ainsi, si l'onde optique est dans le domaine de l'infrarouge, l'épaisseur du miroir est de l'ordre de quelques dixièmes de micromètre.

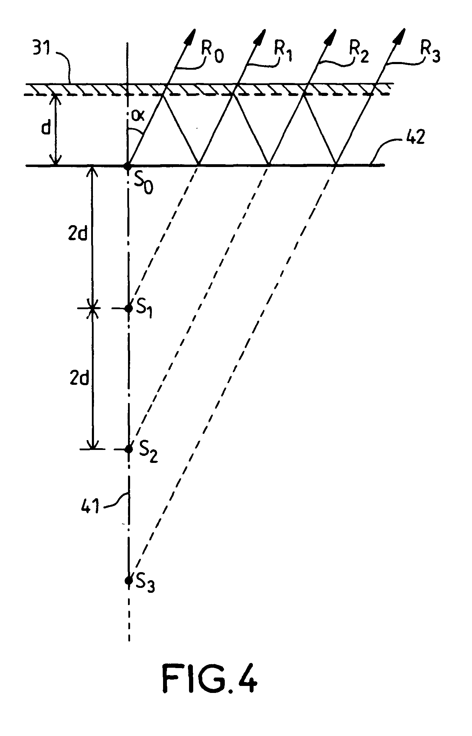

La figure 4 explicite le fonctionnement d'un dispositif selon l'invention. La fibre optique 1 est représentée par son axe 41. Le miroir semi-réfléchissant 31 est placé à la distance d du plan réflecteur 42. Comme indiqué précédemment, le plan réflecteur est par exemple le plan transversal de la gaine 2 en sortie de fibre optique. Ce plan est métallique. Si la gaine n'est pas en matériau métallique, ce plan transversal 42 peut alors être recouvert d'une couche métallique. Le dispositif selon l'invention associé à la fibre optique 1 présente donc une ouverture rayonnante ou source initiale $S_0$, la sortie de la fibre, au centre d'un plan réflecteur 42. Le plan du miroir semi-réfléchissant 31 parallèle au précédent introduit, en plus du rayonnement initial $R_0$, des réflexions multiples $R_1$, $R_2$, $R_3$ ... aux amplitudes décroissantes. Ces réflexions multiples sont parallèles au rayonnement initial $R_0$. La figure 4 illustre ce rayonnement initial pour un angle $\alpha$ autour de l'axe de la fibre optique 1.

Comme le montre par ailleurs la figure 4, les réflexions forment une série d'images et de sources virtuelles $S_1$, $S_2$ ... derrière la source initiale $S_0$. L'espace entre deux sources est égale à deux fois la distance d entre les plans 42, 32.

Le coefficient de réflexion du miroir semi-réfléchissant 31 est égal à $\rho.e^{j\Psi}$, $\Psi$ étant le déphasage appliqué par le miroir à l'onde optique. Les amplitudes du rayonnement initial $R_0$ et des rayonnements réfléchis $R_1$, $R_2$, $R_3$ ... forment alors une suite géométrique de raison $\rho$. Le coefficient de réflexion en puissance est donc $\rho^2$ et selon la conservation de l'énergie $(1-\rho^2)$ est le coefficient de transmission en puissance. Le module $M_0$ du rayonnement initial $R_0$ après passage au travers du miroir semi-réfléchissant 31 est $f(\alpha)E_0\sqrt{1-\rho^2}$ où $E_0$ est l'amplitude de l'onde en sortie de fibre optique et dans l'axe 41 de la fibre, $f(\alpha)E_0$ est alors l'amplitude de l'onde dans la direction qui fait un angle $\alpha$ avec cet axe 41. $E_0$ est l'intensité du signal optique en sortie de la source, c'est-à-dire en sortie de la fibre optique, $f(\alpha)$ est le diagramme source. $f(\alpha)E_0$ est illustré par le faisceau 3 de la fibre optique en figure 1.

Les amplitudes des rayonnements réfléchis sont :

Pour le premier rayonnement, $R_1$ : $M_1 = f(\alpha)E_0\rho\sqrt{1-\rho^2}$

Pour le deuxième rayonnement, $R_2$ : $M_1 = f(\alpha)E_0\rho^2\sqrt{1-\rho^2}$

Pour le rayonnement d'ordre n, $R_n$ : $M_1 = f(\alpha)E_0\rho^n\sqrt{1-\rho^2}$

L'intensité E de signal optique en sortie du miroir semi-réfléchissant 32 consiste en la somme vectorielle de ces rayonnements partiels et pour des plans infiniment grands, soit :

$$E = \sum_{n=0}^{\infty} f(\alpha)E_0\rho^n\sqrt{1-\rho^2}.e^{j\theta_n} \qquad (1)$$

L'angle de phase $\theta_n$ est la composition des retards de phase dus aux réflexions multiples entre les deux plans 42, 31 et aussi au retard de propagation de la raie transmise. Une phase additionnelle apparaît lorsqu'un rayonnement traverse le miroir semi-réfléchissant 32. Cependant étant donné que c'est le cas pour tous les rayonnements $R_1$, $R_2$, $R_3$ ..., il n'est pas besoin d'en tenir compte. Le déphasage $\theta_1$ entre le rayonnement $R_1$ et le rayonnement $R_0$ est la différence de chemin optique entre ces deux rayonnements, il est alors donné par la relation suivante :

$$\theta_1 = \Psi - \pi - \frac{4\pi d}{\lambda}\cos\alpha \qquad (2)$$

Un terme de changement de phase apparaît lors de la traversée du diélectrique 32. Ce terme revenant à chaque rayonnement, il s'annule quand on exprime la différence de phase. Le terme $-\pi$ est dû à l'inversion de phase lors de la réflexion sur le plan réflecteur 42. Le terme $+\Psi$ apparaît lors de la réflexion sur le miroir semi-réfléchissant 31. Les trajets étant les mêmes, le déphasage entre les rayonnements $R_2$ et $R_1$ est égal à celui entre les rayonnements $R_1$ et $R_0$, et donc $\theta_2 = 2\theta_1$. Par récurrence $\theta_n = n\,\theta_1$.

Par ailleurs, $\rho$ étant inférieur à 1, il vient :

$$\lim_{n\to\infty}\sum_{n=0}^{\infty}\rho^n.e^{jn\theta_1} = \frac{1}{1-\rho.e^{j\theta_1}} \qquad (3)$$

Des relations (1) et (3), se déduit la relation suivante :

$$E = f(\alpha)E_0.\frac{\sqrt{1-\rho^2}}{1-\rho.e^{j\theta_1}} \qquad (4)$$

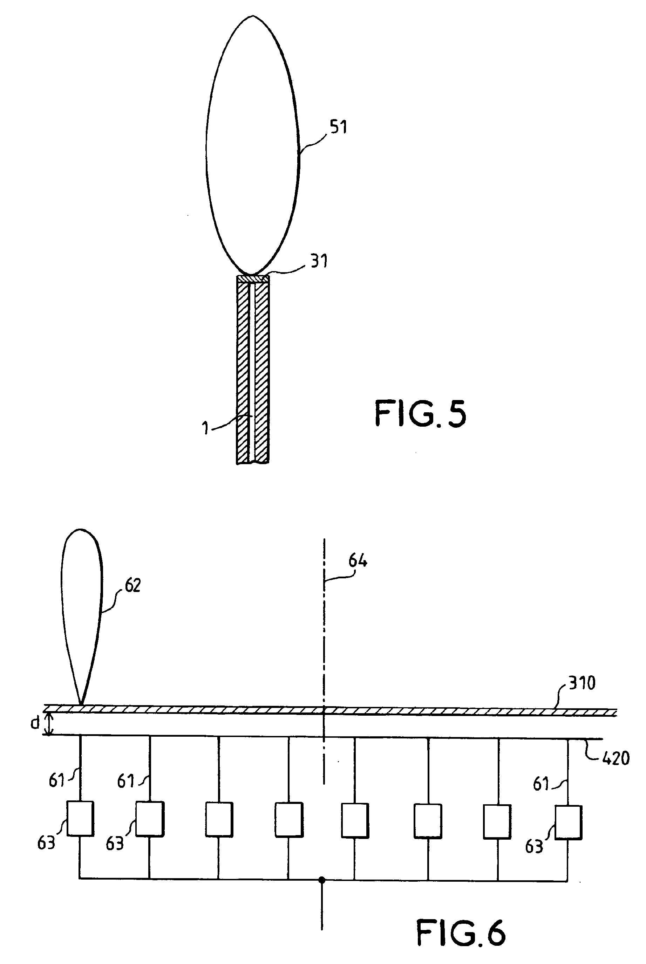

En se référant à la figure 5, le gain S du diagramme de rayonnement 51 en sortie en sortie du dispositif de focalisation est donné, en élevant au carré le module de E et en le normalisant par rapport à $E_0^2$ soit :

$$S = f(\alpha)\frac{1-\rho^2}{1-2\rho.\cos\theta_1+\rho^2} \qquad (5)$$

$\theta_1$ étant défini selon la relation (2).

En plus de l'angle $\alpha$, les variables accessibles des relations (2) et (5) sont :

- $\rho$ le module du coefficient de réflexion ;
- $\Psi$ l'argument du coefficient de réflexion ;
- d la distance entre les deux plans 31, 42 ;
- $\lambda$ la longueur d'onde d'utilisation ;
- $f(\alpha)$ le diagramme de source.

Pour obtenir la meilleure directivité possible en sortie de la fibre optique, après passage par le dispositif de focalisation, il faut un maximum de rayonnement pour $\alpha = 0$, c'est-à-dire que S doit être le plus grand possible pour $\alpha = 0$, dans l'axe 41 de la fibre optique.

A cet effet, on peut chercher la valeur de $\theta_1$ qui donne le maximum de rayonnement S parmi par exemple les valeurs particulières 0, $\pm\pi/2$ et $\pi$ où $\cos\theta_1$ vaut respectivement 1, 0 et -1.

Pour $\theta_1 = 0$, S = $(1+\rho)/(1-\rho)$
Pour $\theta_1 = \pm\pi/2$, S = $(1-\rho^2)/(1+\rho^2)$
Pour $\theta_1 = \pi$, S = $(1-\rho^2)/(1+2\rho+\rho^2)$

Le cas le plus favorable est donné par $\theta_1 = 0$. La longueur d'onde $\lambda$ étant imposée, il est possible de jouer sur les paramètres $\Psi$ et d. Avantageusement, le miroir semi-réfléchissant 31 est par ailleurs choisi de telle sorte que le module $\rho$ de son coefficient de réflexion est le plus grand possible puisque la directivité augmente avec ce module $\rho$. On peut alors obtenir un diagramme de rayonnement 51 en sortie du dispositif selon l'invention tel qu'illustré par la figure 5 et se rapprochant du cas idéal de la figure 2. Ainsi, le miroir semi-réfléchissant est par exemple réalisé par une couche de mélange $TiO_2\text{-}SiO_2$ dont le module du coefficient de réflexion $\rho$ peut être contrôlé. En particulier le coefficient de réflexion peut être déterminé par la proportion d'oxyde de titane ($SiO_2$) dans le mélange $TiO_2\text{-}SiO_2$. La directivité du

faisceau de sortie 51 peut ainsi être contrôlée en jouant sur cette proportion.

Le composite peut aussi être un oxyde du type :

$$Ti_xSi_{1-x}O_2 \qquad \text{où} \quad 0 < x < 1$$

où $0 < x < 1$

Dans ce cas pour contrôler le coefficient de réflexion p on peut par exemple jouer sur la fraction molaire x.

La figure 6 présente un exemple de réalisation d'une antenne selon l'invention. Cette antenne fonctionne par exemple dans le domaine infrarouge. Cette antenne comporte un réseau de N fibres optiques 61. La figure 6 présente un réseau selon une dimension, le réseau peut bien sûr être à deux dimensions. Chaque fibre optique 61 débouche sur un plan réflecteur 420, par exemple un plan métallique. Un plan semi-réflecteur 310 est placé parallèlement à la distance d du plan réflecteur 420 en regard du débouché des fibres optiques. Les deux plans 310, 420 sont séparés d'une distance d. Cette distance ainsi que les paramètres du coefficient de réflexion du miroir semi-réfléchissant sont définis de façon à obtenir la directivité souhaitée pour les faisceaux de sortie 62 comme indiqué précédemment dans le cas d'une fibre unique.

Les ondes optiques sont commandées par des dispositifs de commande 63.

Le diagramme de rayonnement de l'antenne G(θ) est donné par la relation suivante :

$$G(\boldsymbol{\theta}) = g(\boldsymbol{\theta})xF(\boldsymbol{\theta}) \tag{6}$$

θ est l'angle d'observation, pris par rapport à l'axe 64 de l'antenne, g(θ) est le gain de source dans la direction définie par l'angle θ et F(θ) est le facteur de réseau donné par la relation suivante :

$$F(\boldsymbol{\theta}) = \sum_{n=1}^{N} a_n e^{j\frac{2\pi d}{\lambda}(\sin\boldsymbol{\theta} - \sin\boldsymbol{\theta}_0)} \tag{7}$$

soit:

$$G(\boldsymbol{\theta}) = g(\boldsymbol{\theta}).\sum_{n=1}^{N} a_n e^{j\frac{2\pi d}{\lambda}(\sin\boldsymbol{\theta} - \sin\boldsymbol{\theta}_0)} \tag{8}$$

- $a_n$ représente l'amplitude émise par l'élément rayonnant d'ordre n ;
- d est la distance entre éléments rayonnants ;
- $\theta_0$ est l'angle de dépointage ;
- λ la longueur de l'onde émise.

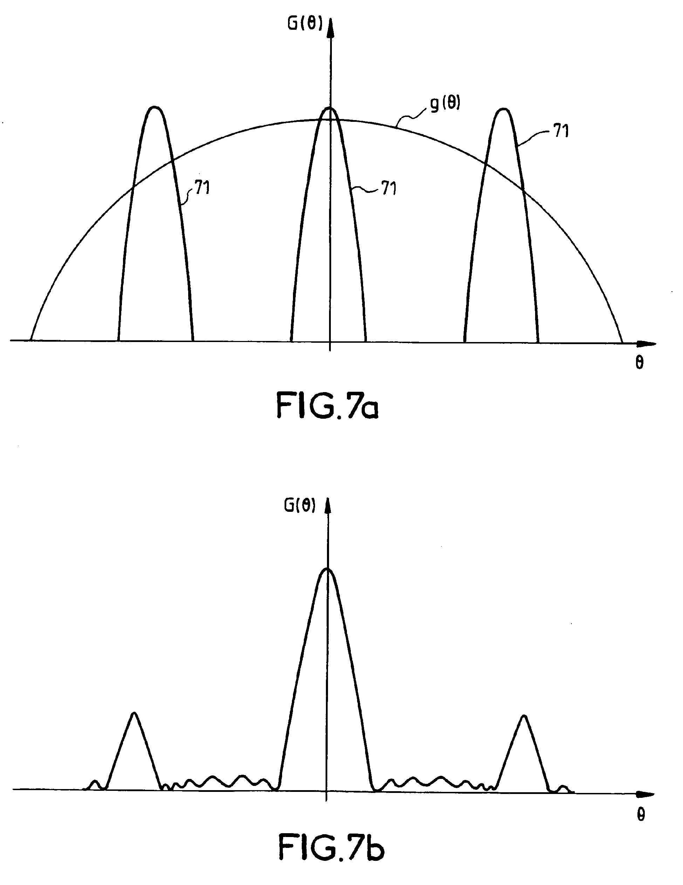

Les figures 7a et 7b illustrent le diagramme de l'antenne de la figure 6.

La figure 7a présente le gain de source g(θ) et le facteur de réseau F(θ) 71 pris indépendamment.

La figure 7b illustre le produit g(θ) x F(θ). Cette figure montre que le faisceau d'antenne obtenu est très directif.

## Revendications

1. Dispositif de focalisation pour fibre optique, **caractérisé en ce qu'**il comporte un miroir semi-réfléchissant plan (31) et un plan réflecteur (42) sur lequel débouche la fibre optique formant une ouverture rayonnante (S), les deux plans (31, 42) étant séparés d'une distance d par un diélectrique (32), le plan du miroir semi-réfléchissant étant sensiblement parallèle au plan réflecteur, le miroir semi-réfléchissant étant apte à être traversé par des rayonnements ($R_1$, $R_2$, $R_3$,..., $R_n$) parallèles au rayonnement $R_0$ de l'ouverture rayonnante, aux amplitudes décroissantes, la directivité du faisceau optique étant fonction du coefficient de réflexion ρ du miroir semi-réfléchissant, le miroir semi-réfléchissant (31) étant arrangé pour satisfaire l'équation du gain S du diagramme de rayonnement en sortie du dispositif:

$$S = f(\alpha) \frac{1-\rho^2}{1-2\rho\cos\theta_1 + \rho^2} \, , \quad \text{où } \theta_1 \text{ est défini par l'équation suivante: } \theta_1 = \psi - \pi - \frac{4\pi d}{\lambda}\cos\alpha \, , \quad f(\alpha)$$

étant le diagramme source, $\psi$ étant l'argument du coefficient de réflexion, $\lambda$ étant la longueur d'onde d'utilisation.

**2.** Dispositif selon la revendication 1, **caractérisé en ce que** le plan réflecteur (42) est le plan transversal de la gaine (2) de la fibre optique au niveau de sa sortie.

**3.** Dispositif selon la revendication 2, **caractérisé en ce qu'**un diélectrique (32) sépare les deux plans (31, 42), ce diélectrique étant en forme de rondin prolongeant la gaine (2) de la fibre optique.

**4.** Dispositif selon la revendication 2, **caractérisé en ce que** le miroir semi-réfléchissant a la forme d'une couche déposée sur le diélectrique.

**5.** Dispositif selon l'une quelconque des revendications précédentes, **caractérisé en ce que** le miroir semi-réfléchissant est composé d'un mélange d'oxyde de titane ($TiO_2$) et d'oxyde de silicium ($SiO_2$).

**6.** Dispositif selon l'une quelconque des revendications 1 à 4, **caractérisé en ce que** le miroir réfléchissant est composé d'un oxyde du type :

$$Ti_xSi_{1-x}O_2, \ 0 < x < 1.$$

**7.** Antenne possédant une grande directivité, **caractérisée en ce qu'**elle comporte un plan réflecteur (420) et un plan semi-réflecteur (320) sensiblement parallèles formant un dispositif de focalisation selon l'une quelconque des revendications 1 à 9, et une pluralité de fibres optiques débouchant dans le plan réflecteur en regard du plan semi-réflecteur.

**8.** Antenne selon la revendication 7, **caractérisée en ce que** la pluralité de fibres optiques forme un réseau linéaire.

**9.** Antenne selon la revendication 7, **caractérisée en ce que** la pluralité de fibres optiques forme un réseau plan.

## Claims

**1.** Focusing device for optical fibre, **characterized in that** it comprises a plane semi-reflecting mirror (31) and a reflector plane (42) on which the optical fibre forming a radiating aperture (S) emerges, the two planes (31, 42) being separated by a distance d by a dielectric (32), the plane of the semi-reflecting mirror being substantially parallel to the reflector plane, the semi-reflecting mirror being able to be traversed by radiations ($R_1$, $R_2$, $R_3$,..., $R_n$) parallel to the radiation ($R_0$) of the radiating aperture, with decreasing amplitudes, the directivity of the optical beam being dependent on the reflection coefficient $\rho$ of the semi-reflecting mirror, the semi-reflecting mirror (31) being devised to satisfy the equation for the gain S of the radiation pattern at the output of the device $S = f(\alpha)\dfrac{1-\rho^2}{1-2\rho\cos\theta_1 + \rho^2}$,

where $\theta_1$ is defined by the following equation: $\theta_1 = \psi - \pi - \dfrac{4\pi d}{\lambda}\cos\alpha$, $f(\alpha)$ being the source pattern,

$\psi$ being the argument of the reflection coefficient, $\lambda$ being the wavelength of use.

**2.** Device according to Claim 1, **characterized in that** the reflector plane (42) is the transverse plane of the sheath (2) of the optical fibre at the level of its exit.

**3.** Device according to Claim 2, **characterized in that** a dielectric (32) separates the two planes (31, 42), this dielectric being in the shape of a billet prolonging the sheath (2) of the optical fibre.

**4.** Device according to Claim 2, **characterized in that** the semi-reflecting mirror has the shape of a layer deposited on the dielectric.

5. Device according to any one of the preceding claims, **characterized in that** the semi-reflecting mirror is composed of a mixture of titanium oxide ($TiO_2$) and silicon oxide ($SiO_2$).

6. Device according to any one of Claims 1 to 4, **characterized in that** the reflecting mirror is composed of an oxide of the type:

$$Ti_xSi_{1-x}O_2, 0 < x < 1.$$

7. Antenna possessing large directivity, **characterized in that** it comprises a reflector plane (420) and a semi-reflector plane (320) that are substantially parallel and form a focusing device according to any one of Claims 1 to 9, and a plurality of optical fibres emerging into the reflector plane opposite the semi-reflector plane.

8. Antenna according to Claim 7, **characterized in that** the plurality of optical fibres forms a linear array.

9. Antenna according to Claim 7, **characterized in that** the plurality of optical fibres forms a plane array.

**Patentansprüche**

1. Fokussierungsvorrichtung für Lichtleitfaser, **dadurch gekennzeichnet, dass** sie einen halb reflektierenden ebenen Spiegel (31) und eine Reflexionsebene (42), auf der die Lichtleitfaser, die eine strahlende Öffnung (S) bildet, mündet, aufweist, wobei die zwei Ebenen (31, 42) von einer Entfernung d durch ein Dielektrikum (32) getrennt sind, wobei die Ebene des halb reflektierenden Spiegels im Wesentlichen zu der Reflexionsebene parallel ist, wobei der halb reflektierende Spiegel von Strahlungen ($R_1, R_2, R_3, ..., R_n$), die zu der Strahlung $R_0$ der strahlenden Öffnung parallel sind, durchquert werden kann, mit abnehmenden Amplituden, wobei die Richtfähigkeit des Strahlenbündels von dem Reflexionskoeffizienten $\rho$ des halb reflektierenden Spiegels abhängt, wobei der halb reflektierende Spiegel (31) eingerichtet ist, um die Gleichung der Verstärkung S des Strahlungsdiagramms am Ausgang der Vorrichtung:

$$S = f(\alpha)\frac{1-\rho^2}{1-2\rho\cos\theta_1+\rho^2}$$ zu erfüllen, wobei $\theta_1$ von der folgenden Gleichung definiert ist:

$$\theta_1 = \psi - \pi - \frac{4\pi d}{\lambda}\cos\alpha \text{ ,}$$ wobei $f(\alpha)$ das Quellendiagramm, $\psi$ das Argument des Reflexionskoeffizienten, $\lambda$ die Gebrauchswellenlänge ist.

2. Vorrichtung nach Anspruch 1, **dadurch gekennzeichnet, dass** die reflektierende Ebene (42) die Querebene der Hülle (2) der Lichtleitfaser auf dem Niveau ihres Ausgangs ist.

3. Vorrichtung nach Anspruch 2, **dadurch gekennzeichnet, dass** ein Dielektrikum (32) die zwei Ebenen (31, 42) trennt, wobei dieses Dielektrikum die Form einer Stange hat, die die Hülle (2) der Lichtleitfaser verlängert.

4. Vorrichtung nach Anspruch 2, **dadurch gekennzeichnet, dass** der halb reflektierende Spiegel die Form einer auf dem Dielektrikum aufgebrachten Schicht hat.

5. Vorrichtung nach einem der vorhergehenden Ansprüche, **dadurch gekennzeichnet, dass** der halb reflektierende Spiegel aus einem Gemisch aus Titanoxid ($TiO_2$) und Siliciumoxid ($SiO_2$) besteht.

6. Vorrichtung nach einem der Ansprüche 1 bis 4, **dadurch gekennzeichnet, dass** der reflektierende Spiegel aus einem Oxid des folgenden Typs besteht:

$$Ti_xSi_{1-x}O_2, 0 < x < 1.$$

7. Anntenne, die eine große Richtfähigkeit besitzt, **dadurch gekennzeichnet, dass** sie eine reflektierende Ebene (420) und eine halb reflektierende Ebene (320), die im Wesentlichen parallel sind, aufweist, die eine Fokussierungsvorrichtung nach einem der Ansprüche 1 bis 9 bilden, und mehrere Lichtleitfasern, die in der reflektierenden Ebene gegenüber der halb reflektierenden Ebene münden.

8. Antenne nach Anspruch 7, **dadurch gekennzeichnet, dass** die mehreren Lichtleitfasern ein lineares Netz bilden.

9. Antenne nach Anspruch 7, **dadurch gekennzeichnet, dass** die mehreren Lichtleitfasern ein ebenes Netz bilden.

FIG.1

FIG.2

FIG.3

FIG.4

FIG.5

FIG.6

G(θ)

g(θ)

~71

~71    ~71

θ

## FIG.7a

G(θ)

θ

## FIG.7b

**EP 1 542 047 B1**

## RÉFÉRENCES CITÉES DANS LA DESCRIPTION

**Documents brevets cités dans la description**

- US 3704996 A